# EUROPEAN PATENT APPLICATION

(11) **EP 4 098 388 A1**
(43) Date of publication of application: **07.12.2022**
(21) Application number: 21747075.6
(22) Date of filing: 28.01.2021
(51) Int. Cl.: B23H 9/14, B23H 7/36

(54) **NARROW-HOLE ELECTRIC DISCHARGE MACHINE**

(30) Priority: 28.01.2020 JP 2020011902
(71) Applicant: Makino Milling Machine Co., Ltd., Tokyo 152-8578 (JP)
(72) Inventor: TSUCHIYA, Kazuhiko, Aiko-gun, Kanagawa 243-0303 (JP)
(74) Representative: McWilliams, David John
(86) International application number: PCT/JP2021/003081
(87) International publication number: WO 2021/153685

(57) **Abstract**

A narrow-hole electric discharge machine (100) is provided with: a pump (52) with a variable flow rate that supplies machining fluid to a pipe electrode (28); a flow rate sensor (56) provided in a pipe between the pump (52) and the pipe electrode (28), the flow rate sensor (56) being configured to detect the flow rate of the machining fluid flowing through the pipe; a storage unit (58b) that stores a set flow rate of a jet flow suitable for each cross-sectional size of a plurality of pipe electrodes (28) having different cross-sectional sizes; and a pump control unit (58a) that drives the pump (52) such that the value detected by the flow rate sensor (56) is kept at the set flow rate stored in the storage unit (58b) suitable for the cross-sectional size of the pipe electrode (28) currently attached to a main shaft (114).

## Description

### FIELD

The present disclosure relates to a narrow-hole electric discharge machine.

### BACKGROUND

Narrow-hole electric discharge machines eject machining fluid from a thin pipe electrode and form a narrow hole in a workpiece by generating a discharge event between the pipe electrode and the workpiece while blowing off swarf. In such a narrow-hole electric discharge machine, fluctuations in the ejection amount of the machining fluid from the pipe electrode may influence machining speed and machining accuracy. Thus, in the field of narrow-hole electric discharge machine, various devices for ejecting machining fluid in a fixed amount have been proposed (for example, Patent Literature 1). The narrow-hole machining device of Patent Literature 1 comprises, as structures for supplying machining fluid, a cylinder body in which the machining fluid is stored, a plunger that slides inside the cylinder body to eject the machining fluid, a feed screw for sliding the plunger, and a motor for rotating the feed screw. This device is configured to supply a constant amount of machining fluid from the cylinder body to the electrode by controlling the motor so that the feed rate of the plunger is maintained constant.

### [CITATION LIST]

### [PATENT LITERTURE]

[PTL 1] Japanese Examined Patent Publication (Kokoku) No. 64-6890

### SUMMARY

### [TECHNICAL PROBLEM]

There has been a concept of controlling the machining fluid flow rate to the pipe electrode to be constant, as described in Patent Literature 1, but in most cases, a method of making the machining fluid pressure to the pipe electrode constant has been adopted, which has not caused significant problems. Conversely, in narrow-hole electric discharge machines, productivity has been improved by using a long pipe electrode and reducing the exchange frequency of the pipe electrode. However, in long pipe electrodes, the inner diameter tends to fluctuate along the length direction due to machining accuracy of the pipe electrode, and in constant pressure control, the ejection amount also fluctuates due to fluctuations of the inner diameter. Furthermore, the length of the pipe electrode is consumed and shortened as electric discharge machining progresses, and the ejection amount varies depending on the length of the pipe electrode. Thus, in some cases, it is difficult to maintain the machining fluid at a constant ejection amount when the narrow hole electric discharge machining is performed with a long pipe electrode. Furthermore, in, for example, the device of Patent Literature 1, since a feed screw is used as the structure for supplying the machining fluid, the supply amount of the machining fluid is influenced by the accuracy of the pitch of the feed screw. When a long pipe electrode is used in the device of Patent Literature 1, it is necessary to prepare a long feed screw, but with a long feed screw, the pitch tends to fluctuate along the length direction due to machining accuracy. Thus, when a long pipe electrode is used, it may not be possible to perform high-speed and high-precision narrow hole machining.

In consideration of the problems described above, the present disclosure aims to provide a narrow-hole electric discharge machine with which productivity can be improved and stable high-speed and high-precision machining can be performed by using a long pipe electrode and reducing the frequency of pipe electrode exchange.

### [SOLUTION TO PROBLEM]

An aspect of the present disclosure provides a narrow-hole electric discharge machine for forming a narrow hole in a workpiece while ejecting a jet of machining fluid from a pipe electrode exchangeably mounted on a spindle, the machine comprising a variable flow rate pump for supplying the machining fluid to the pipe electrode, a flow sensor, provided in piping between the pump and the pipe electrode, for detecting a flow rate of the machining fluid flowing in the piping, a storage unit configured to store set flow rates of jets suitable for each cross-sectional size of a plurality of pipe electrodes having different cross-sectional sizes which can be mounted on the spindle, and a pump control unit configured to drive the pump so as to maintain a detection value of the flow sensor at the set flow rate stored in the storage unit suitable for the cross-sectional size of the pipe electrode currently mounted on the spindle.

In the narrow-hole electric discharge machine according to an embodiment of the present disclosure, the pump is controlled so that the detection value of the flow sensor provided in the piping between the pump and the pipe electrode is maintained at the set flow rate suitable for the cross-sectional size of each pipe electrode. Thus, when a long pipe electrode is used, even if the pipe electrode is worn and shortened, machining fluid can be supplied from the pump to the pipe electrode at a constant supply amount. Therefore, the frequency of pipe electrode exchange can be reduced, whereby productivity is improved, and stable high-speed and high-precision narrow-hole electric discharge machining can be performed.

The flow sensor may comprise a first sensor having a first measurement value interval and a second sensor having a second measurement value interval greater than the first measurement value interval, the first sensor may be used for set flow rates less than a predetermined threshold, and the second sensor may be used for set flow rates equal to or greater than the threshold. In this case, the first sensor having a smaller first measurement value interval is used for small set flow rates. Thus, even in the case of a low machining fluid flow rate, the flow rate of the machining fluid can be detected with high accuracy.

The first measurement value interval and the second measurement value interval may be determined so that a ratio of the first measurement value interval to a smallest set flow rate in the storage unit for which the first sensor is used is less than a ratio of the second measurement value interval to a smallest set flow rate in the storage unit for which the second sensor is used. A pipe electrode with a smaller set flow rate is more influenced by fluctuations in the flow rate of the machining fluid than a pipe electrode with a larger set flow rate. In the above configuration, the minimum set flow rate for which the first sensor for small flow rates is used is measured at a finer measurement value interval (i.e., a higher resolution) than the minimum set flow rate for which the second sensor for large flow rates is used. Thus, with the above configuration, smaller set flow rates can be measured with high resolution. Therefore, even when a pipe electrode having a small set flow rate is used, high-precision machining can be performed.

The pump control unit may determine that the pipe electrode has become clogged when a detection value of the flow sensor is less than the set flow rate for a predetermined time or longer. In this case, clogging of the pipe electrode can be detected at an early stage, whereby machining defects can be prevented.

### [ADVANTAGEOUS EFFECTS OF INVENTION]

According to the aspect of the present disclosure, there can be provided a narrow-hole electric discharge machine which uses a long pipe electrode, whereby stable high-speed and high-precision machining can be performed while reducing the frequency of pipe electrode exchange to improve productivity.

### BRIEF DESCRIPTION OF DRAWINGS

FIG. 1 is a schematic view showing a narrow-hole electric discharge machine according to an embodiment.
FIG. 2 is a table showing examples of individual pipe electrode specifications and set flow rates.

### DESCRIPTION OF EMBODIMENTS

The narrow-hole electric discharge machine according to an embodiment will be described below with reference to the attached drawings. In order to facilitate understanding, the scales of the drawings have been changed in some cases.

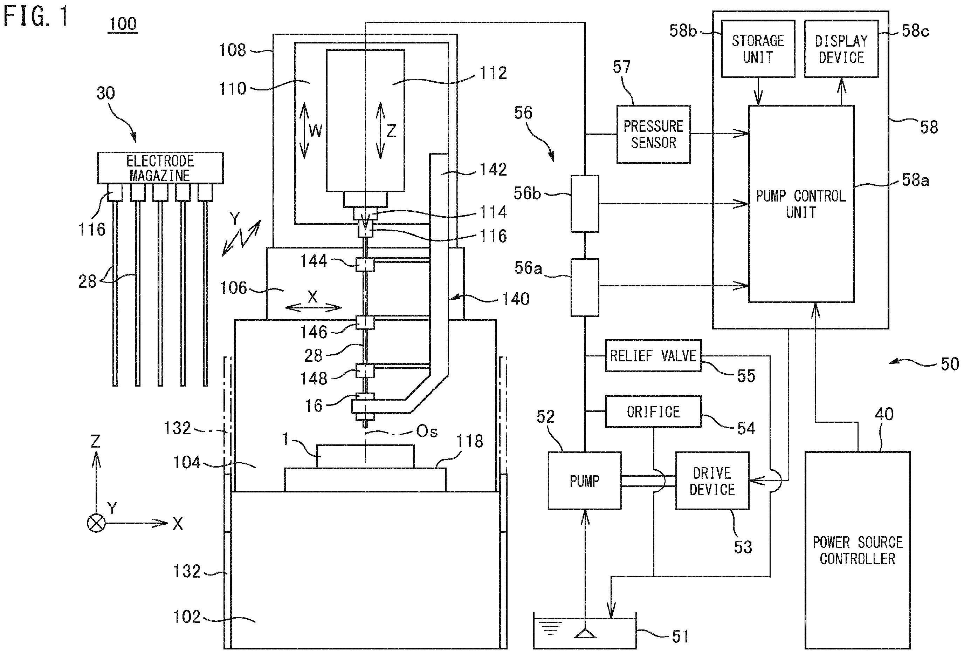

FIG. 1 is a schematic view showing a narrow-hole electric discharge machine according to an embodiment. Below, for convenience, as shown in FIG. 1, the three orthogonal axis directions (X-axis direction, Y-axis direction, and Z-axis direction) are defined as the left-right directions, the front-rear directions, and the up-down directions, respectively, and the structure of each part will be described according to these definitions. The narrow-hole electric discharge machine (which may also be referred to hereinafter simply as a "machine tool") 100 is configured so as to form a narrow hole in a workpiece 1 by generating a discharge event between a pipe electrode 28 and the workpiece 1 while ejecting a jet of machining fluid from the pipe electrode 28 exchangeably mounted on a spindle 114. Such a machine tool 100 comprises a bed (pedestal) 102, a column 104, an X-axis slider 106, a ram 108, a W-axis slider 110, a spindle head 112, a spindle 114, a W-axis guide assembly 140, a table 118, a machining tank 132, an electrode magazine 30, a power supply controller 40, and a machining fluid supply device 50.

The column 104 stands on a rear part of the upper surface of the bed 102, and the X-axis slider 106 is attached to the upper surface of the column 104 so as to be movable in the X-axis direction. The ram 108 is attached to the upper surface of the X-axis slider 106 so as to be movable in the Y-axis direction. The W-axis slider 110 is attached to the front surface of the ram 108 so as to be movable in the W-axis direction parallel to the Z-axis direction.

The spindle head 112 is attached to the front surface of the W-axis slider 110 so as to be movable in the Z-axis direction. The spindle 114 is supported on the spindle head 112 so as to be rotatable about a central axis Os parallel to the Z axis. The spindle 114 projects downward from the bottom surface of the spindle head 112. An electrode holder 116 is mounted on the tip of the spindle 114. The electrode holder 116 is configured to hold the pipe electrode 28. The pipe electrode 28 has an elongated pipe-like shape, and machining fluid (for example, water or oil) passes through the inside thereof. The machining fluid is supplied from the machining fluid supply device 50 to the pipe electrode 28, and is ejected as a jet from the tip end (lower end portion) of the pipe electrode 28.

The W-axis guide assembly 140 is attached to the W-axis slider 110. The W-axis guide assembly 140 has a guide arm 142 attached to the front surface of the W-axis slider 110. The guide arm 142 extends in the Z-axis direction and moves in the vertical direction together with the W-axis slider 110. The movement axis of the W-axis slider 110 and the guide arm 142 is defined as the W-axis. The W-axis is parallel to the Z-axis. An electrode guide 16 which supports the lower portion of the pipe electrode 28 so as to be movable in the axis Os direction and rotatable about the axis Os is attached to the lower end of the guide arm 142. Furthermore, a power supply brush (not illustrated) for supplying electric power to the pipe electrode 28 is provided on the lower end part of the guide arm 142 near the electrode guide 16. The electrode guide 16 is exchanged according to the outer diameter of the pipe electrode 28 used. For this purpose, the machine tool 100 may include a guide magazine (not illustrated) for storing a plurality of electrode guides 16 having different sizes. The electrode guide 16 attached to the guide arm 142 may be automatically exchanged with the desired electrode guide 16 in the guide magazine by a guide exchange device (not illustrated).

The pipe electrode 28 extends between the electrode holder 116 and the electrode guide 16 along the axis Os, the upper end thereof is held by the electrode holder 116, and the lower part thereof is held by the electrode guide 16. As the spindle 114 rotates about the axis Os, the pipe electrode 28 rotates about the axis Os together with the electrode holder 116. Electrodes holding devices 144, 146, 148 configured to hold the pipe electrode 28 between the electrode holder 116 and the electrode guide 16 are attached to the guide arm 142. The electrode holding devices 144, 146, 148 allow the elongated pipe electrode 28 to be maintained straight. In FIG. 1, the W-axis guide assembly 140 has three electrode holding devices 144, 146, 148, whereas the W-axis guide assembly 140 has one or two electrode holding devices. Alternatively, it may have four or more electrode holding devices.

Though omitted from the drawing, the machine tool 100 of FIG. 1 has an X-axis drive unit which moves the X-axis slider 106 in the left-right directions, a Y-axis drive unit which moves the ram 108 in the front-rear directions, a W-axis drive unit which moves the W-axis slider 110 in the up-down directions, a Z-axis drive unit which moves the spindle head 112 in the up-down directions, and a spindle drive unit which rotates the spindle 114 about the axis Os. The X-axis drive unit, Y-axis drive unit, Z-axis drive unit, and W-axis drive unit may be composed of, for example, a ball screw and a servomotor which rotationally drives the ball screw, and the spindle drive unit may be composed of, for example, a spindle motor. The X-axis drive unit, Y-axis drive unit, Z-axis drive unit, W-axis drive unit, and spindle drive unit are controlled by the NC device of machine tool 100. In this manner, the electrode holder 116 and the electrode guide 16 can move relative to the workpiece 1 in the X-axis direction, the Y-axis direction, and the Z-axis direction. Further, the distance between the electrode holder 116 and the electrode guide 16 can be adjusted by raising and lowering the spindle head 112 with respect to the W-axis slider 110. Thus, regardless of the change in the length of the pipe electrode 28 due to wear of the pipe electrode 28, the upper and lower ends of the pipe electrode 28 can always be supported by the electrode holder 116 and the electrode guide 16 during machining. Meanwhile, as the spindle head 112 moves downward along the Z-axis so that the electrode holder 116 and the electrode holding devices 144, 146, and 148 do not interfere with each other, the electrode holding device 144 at the uppermost stage first opens, next, the electrode holding device 146 underneath the electrode holding device 144 opens, and in this manner, the electrode holding devices 144, 146, and 148 open sequentially from the top. At this time, the electrode holder 116 can be lowered until it comes closest to the lower end portion of the guide arm 142 without interference between the electrode holding devices 144, 146, 148 in the open position and the spindle head 112. Furthermore, the machine tool 100 comprises drive units (not illustrated) which independently drive the electrode holding devices 144, 146, and 148, and these drive units are controlled by, for example, the NC device.

The electrode magazine 30 may be arranged, for example, on the side of the spindle head 112, supported by, for example, the column 104. The electrode magazine 30 stores a plurality of pipe electrodes 28 having different cross-sectional sizes. An electrode holder 116 is attached to each pipe electrode 28. The electrode magazine 30 is configured to move the plurality of pipe electrodes 28 along an endless orbit, and a desired pipe electrode 28 can be moved to an exchange position. The electrode magazine 30 is controlled by the mechanical controller of the machine tool 100. The spindle head 112 moves to the electrode magazine 30 and is controlled to exchange the pipe electrode 28 attached to the spindle 114 with a desired pipe electrode arranged at the exchange position by the electrode magazine 30.

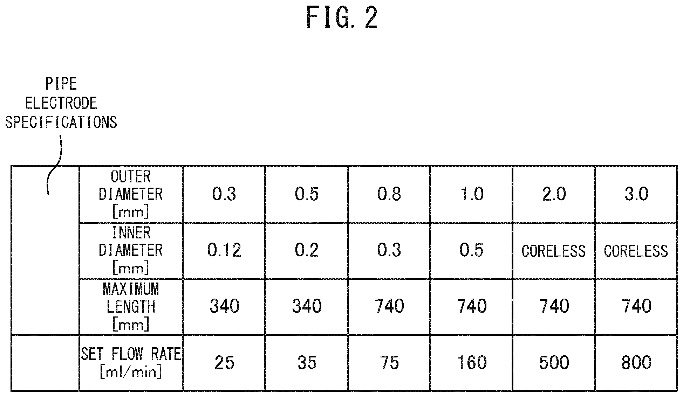

FIG. 2 is a table showing examples of individual pipe electrode specifications and set flow rates. As shown in FIG. 2, the plurality of pipe electrodes 28 stored in the electrode magazine 30 have different cross-sectional sizes. The machine tool 100 can use a relatively long pipe electrode 28. For example, as shown in FIG. 2, the longest pipe electrode 28 has a length greater than 700 mm. Each pipe electrode 28 has a machining fluid set flow rate suitable for the cross-sectional size thereof in order to perform machining efficiently and/or to perform machining with high accuracy. Such a set flow rate can be determined in advance by, for example, experimentation. As shown in FIG. 2, smaller diameter pipe electrodes 28 have smaller set flow rates. The cross-sectional sizes which are considered to influence the set flow rate include, for example, at least one of the outer diameter (i.e., the diameter of the narrow hole formed), the inner diameter, and the cross-sectional area of the pipe electrode 28. The set flow rate can also vary depending on various machining conditions (for example, machining speed and/or current value). Thus, the storage unit 58b may store a set flow rate for each machining condition for each pipe electrode. In addition, "coreless" in FIG. 2 means that the pipe electrode is further inserted into the pipe electrode so that the core that is not used in the electric discharge machining remains.

With reference to FIG. 1, the table 118 is arranged on the upper surface of the bed 102 in front of the column 104. The workpiece 1 is attached to the upper surface of the table 118. The table 118 may be provided with a positioning device such as a table for rotating the workpiece 1 (not illustrated). For example, the workpiece 1 may be a turbine blade or vane used in a gas turbine, and narrow holes for the passage of cooling air are formed in the surface of the turbine blade.

A machining tank 132 is provided around the table 118 so as to surround the entire table 118. The machining tank 132 is movable in the vertical direction. The alternate long and short dash line in FIG. 1 represents the machining tank 132 in the upper position for machining, and the solid line represents the machining tank 132 in the lower position for non-machining states such as during setup operations. The machine tool 100 comprises a machining tank drive device (not illustrated) for moving the machining tank 132. When the machining tank 132 is in the upper position, the machining fluid is supplied from the machining fluid supply device 50 to the machining tank 132 through a conduit (not illustrated) different from the pipe electrode 28. The machining tank drive device may be controlled by the mechanical controller.

The power supply controller 40 is wired or wirelessly communicably connected to the various components of the machine tool 100 and is configured to control these components. The power supply controller 40 may include the NC device and mechanical controller described above. The power supply controller 40 may have components such as a processor (for example, one or a plurality of CPUs), a storage device (for example, one or a plurality of hard disk drives, ROM (read-only memory), and/or RAM (random access memory)), a display device (for example, a liquid crystal display and/or a touch panel), and an input device (for example, a mouse, keyboard, and/or touch panel). The power supply controller 40 may further comprise other components. The components of the power supply controller 40 can be connected to each other via buses or the like. The power supply controller 40 may comprise a PLC (Programmable Logic Controller), a PC (Personal Computer), a server, or a tablet.

The machining fluid supply device 50 comprises a tank 51, a pump 52, a drive device 53 for the pump 52, an orifice 54, a relief valve 55, a flow sensor 56, a pressure sensor 57, and a pump controller 58. The machining fluid supply device 50 may further comprise other components.

The tank 51 stores the machining fluid supplied to the pipe electrode 28 and the machining tank 132. The pump 52 supplies the machining fluid in the tank 51 to the pipe electrode 28 and the machining tank 132. The pump 52 has a variable flow rate and may be, for example, a diaphragm type pump. Since diaphragm type pumps do not have sliding members such as pistons, there is no wear of the seals due to the sliding member, whereby high pressure can be output. The pump 52 may be another type of pump. When the pump 52 generates pulsations (for example, in diaphragm type pumps), the machining fluid supply device 50 may have a damper between the pump 52 and the spindle 114 to reduce the pulsations. The drive device 53 drives the pump 52 so that the pump 52 has a variable flow rate. For example, the drive device 53 may be a motor having an inverter. The drive device 53 is controlled by the pump controller 58.

The orifice 54 is configured to adjust the flow rate of the machining fluid flowing between the pump 52 and the pipe electrode 28 in order to operate the pump 52 at a valid minimum rotation speed. With reference to FIG. 2, for example, a pipe electrode having an outer diameter of 0.3 mm has a set flow rate of 25 ml/min. In order to supply the machining fluid to the pipe electrode 28 at such a flow rate, it may be necessary to operate the pump 52 at a rotation speed lower than the effective minimum rotation speed of the pump 52. Referring to FIG. 1, thus, in order to supply the pipe electrode 28 with the machining fluid at the set flow rate described above while operating the pump 52 at a rotation speed higher than the effective minimum rotation speed, the orifice 54 is configured to return excess machining fluid to the tank 51. The relief valve 55 is configured to return excess machining fluid to the tank 51 when a pressure close to the maximum allowable pressure of pump 52 (for example, 20 MPa) is generated in the machining fluid between the pump 52 and the pipe electrode 28, to thereby reduce the pressure of the machining fluid to a predetermined first pressure P1 (for example, P1 = 19 MPa) or less. Thus, the relief valve 55 acts as a mechanical stopper for the pump 52.

The flow sensor 56 is provided in the piping between the pump 52 and the pipe electrode 28 (for example, between the pump 52 and the spindle 114), and is configured to detect the flow rate of the machining fluid flowing in this piping. The flow sensor 56 has a first sensor 56a for small flow rates and second sensor 56b for large flow rates. Each of the first sensor 56a and the second sensor 56b may be a non-contact sensor (for example, a sensor which uses ultrasonic waves) which is attached to the outer wall of the piping and is configured to detect the flow rate of the machining fluid from the outside of the piping. The first sensor 56a and the second sensor 56b are arranged in series with each other. Each of the first sensor 56a and the second sensor 56b is configured to transmit a detection value to the pump controller 58.

The first sensor 56a has a first measurement value interval s1. For example, the first sensor 56a has a measurement range of 0 to 255 ml/min and is configured to measure this range in 256 divisions (i.e., the first measurement value interval s1 = 1 ml/min). The second sensor 56b has a second measurement value interval s2 which is greater than the first measurement value interval s1. For example, the second sensor 56b has a measurement range of 0 to 2550 ml/min and is configured to measure this range in 256 divisions (i.e., the second measurement value interval s2 = 10 ml/min).

Referring to FIG. 2, the first sensor 56a is used for set flow rates of less than a predetermined threshold (for example, 100 ml) (i.e., in FIG. 2, the first sensor 56a is used for set flow rates of pipe electrodes having outer diameters of 0.3 mm, 0.5 mm and 0.8 mm). The second sensor 56b is used for set flow rates equal to or greater than the above threshold (i.e., in FIG. 2, the second sensor 56b is used for set flow rates of pipe electrodes having outer diameters of 1.0 mm, 2.0 mm and 3.0 mm).

In FIG. 2, the minimum set flow rate for which the first sensor 56a is used is 25 ml/min for a pipe electrode having an outer diameter of 0.3 mm. Thus, the ratio r1 of the first measurement value interval s1 (s1 = 1 ml/min) to this set flow rate is 1/25. The minimum set flow rate for which the second sensor 56b is used is 160 ml/min for a pipe electrode having an outer diameter of 1.0 mm. Thus, the ratio r2 of the second measurement value interval s2 (s2 = 10 ml/min) to this set flow rate is 1/16. Therefore, the ratio r1 (= 1/25) of the first measurement value interval s1 to the minimum set flow rate for which the first sensor 56a is used is less than the ratio r2 (= 1/16) of the second measurement value interval s2 to the minimum set flow rate for which the second sensor 56b is used. This means that the flow rate of a pipe electrode having an outer diameter of 0.3 mm is measured more finely than the flow rate of a pipe electrode having an outer diameter of 1.0 mm. For example, a small diameter pipe electrode 28 is considered to be prone to vibration during machining due to the jet ejected from the pipe electrode 28 itself, and thus, it is considered that the small diameter pipe electrode 28 is more influenced by the fluctuations in the flow rate of the machining fluid than the large diameter pipe electrode 28. Therefore, the above configuration for more finely measuring the flow rate of the small diameter pipe electrode 28 makes it possible to perform high-precision machining even when the small diameter pipe electrode 28 is used.

The pressure sensor 57 is configured to detect the pressure of the machining fluid flowing in the piping between the pump 52 and the pipe electrode 28 (for example, between the pump 52 and the spindle 114). The pressure sensor 57 is configured to transmit a detection value to the pump controller 58.

The pump controller 58 is wired or wirelessly communicably connected to the various components of the machining fluid supply device 50 and is configured to control some of the components thereof. The pump controller 58 has, for example, a pump control unit 58a, a storage unit 58b, and a display device 58c. The pump control unit 58a may be realized by a processor (for example, one or a plurality of CPUs) which operates in accordance with a program stored in the storage unit 58b. The storage unit 58b may include one or a plurality of hard disk drives, ROM and/or RAM. The storage unit 58b stores various programs executed by the processor. The storage unit 58b can store various other data. The display device 58c may include a liquid crystal display and/or a touch panel. The pump controller 58 may have other components (for example, an input device such as a mouse, keyboard, and/or touch panel). The components of the pump controller 58 can be connected to each other via buses or the like. The pump controller 58 may include a PLC, a PC, a server, or a tablet. The pump controller 58 may be incorporated in the power supply controller 40 described above. Alternatively, the pump controller 58 may be provided independently of the power supply controller 40. The pump controller 58 is configured to be capable of communicating with the NC device of the power supply controller 40 and the mechanical controller.

The storage unit 58b stores the set flow rate of each pipe electrode 28 shown in FIG. 2. The pump control unit 58a can determine the pipe electrode 28 currently mounted on the spindle 114, for example, based on the NC program used in the power supply controller 40. Further, the pump control unit 58a reads the set flow rate of the corresponding pipe electrode 28 from the storage unit 58b. The pump control unit 58a controls the drive device 53 so that the detection value of the flow sensor 56 is maintained at the set flow rate of the pipe electrode 28 currently mounted on the spindle 114. When it is determined that the pipe electrode 28 currently mounted on the spindle 114 has an outer diameter cross-sectional size of 0.3 mm, 0.5 mm, or 0.8 mm, the pump control unit 58a uses the detection value from the first sensor 56a for small flow rates to control the drive device 53. Furthermore, when it is determined that the pipe electrode 28 currently mounted on the spindle 114 has an outer diameter cross-sectional size of 1.0 mm, 2.0 mm or 3.0 mm, the pump control unit 58a uses the detection value from the second sensor 56b for large flow rates to control the drive device 53.

Furthermore, the storage unit 58b stores a predetermined second pressure P2 for maintaining the pressure of the machining fluid between the pump 52 and the pipe electrode 28 at the rated pressure (for example, 17 MPa) of the pump 52 or less. Thus, the second pressure P2 may be the same as the rated pressure of the pump 52. The second pressure P2 is less than the first pressure P1 (for example, P1 = 19 MPa) of the relief valve 55. The pump control unit 58a reads the second pressure P2 from the storage unit 58b. The pump control unit 58a controls the drive device 53 so that the detection value of the pressure sensor 57 does not exceed the second pressure P2. Thus, the pump controller 58 acts as a soft stopper for the pump 52.

Furthermore, the storage unit 58b stores a predetermined period t (for example, t = 10 seconds) for detecting clogging of the pipe electrode 28. The pump control unit 58a reads the period t from the storage unit 58b. The pump control unit 58a determines that the pipe electrode 28 has become clogged when the detection value of the flow sensor 56 (first sensor 56a or second sensor 56b) is less than the set flow rate for a period t or more. When it is determined that the pipe electrode 28 has become clogged, the pump controller 58 may issue a warning to the operator. The warning may be displayed on, for example, the display device 58c. Alternatively or additionally, the warning may be issued audibly.

In the machine tool 100 as described above, the pump 52 is controlled so that the detection value of the flow sensor 56 provided in the piping between the pump 52 and the pipe electrode 28 is maintained at a set flow rate suitable for the cross-sectional size of each pipe electrode 28. Thus, even when a long pipe electrode 28 is used, machining fluid can be supplied from the pump 52 to the pipe electrode 28 at a constant supply rate. Therefore, it is possible to reduce the exchange frequency of the pipe electrode 28 to improve productivity and to perform stable and high-precision machining.

Furthermore, in the machine tool 100, the flow sensor 56 comprises a first sensor 56a having a first measurement value interval s1 and a second sensor 56b having a second measurement value interval s2 greater than the first measurement value interval s1, the first sensor 56a is used for set flow rates of less than a predetermined threshold (for example, 100 ml/min), and the second sensor 56b is used for set flow rates which are equal to or greater than this threshold. Thus, for small set flow rates, the first sensor 56a having the smaller first measurement value interval s1 is used. Therefore, even when the flow rate of the machining fluid is low, the flow rate can be detected with high accuracy.

Furthermore, in the machine tool 100, the first measurement value interval s1 and the second measurement value interval s2 are determined so that the ratio r1 of the first measurement value interval s1 to the smallest set flow rate for which the first sensor 56a is used is less than the ratio r2 of the second measurement value interval s2 to the smallest set flow rate for which the second sensor 56b is used. As described above, a pipe electrode having a smaller set flow rate is more influenced by fluctuations in the flow rate of the machining fluid than a pipe electrode having a larger set flow rate. In the configuration described above, the smallest set flow rate for which the first sensor 56a for small flow rates is used is measured at a finer measurement value interval (i.e., a higher resolution) as compared to the minimum set flow rate for which the second sensor 56b for large flow rates is used. Thus, with the above configuration, a smaller set flow rate can be measured with high resolution. Therefore, even when a pipe electrode 28 having a small set flow rate is used, high-precision machining can be performed.

Furthermore, in the machine tool 100, the pump control unit 58a determines that the pipe electrode 28 has become clogged when the detection value of the flow sensor 56 is less than the set flow rate for a predetermined period or longer. Thus, clogging of the pipe electrode 28 can be detected at an early stage, whereby machining defects can be prevented. It is also possible to automatically exchange the pipe electrode 28 to prevent production delays.

Furthermore, the machine tool 100 comprises a pressure sensor 57 in addition to the flow sensor 56, the storage unit 58b stores a predetermined second pressure P2 for maintaining the pressure of the machining fluid between the pump 52 and the pipe electrode 28 below the rated pressure of the pump 52, and the pump control unit 58a controls the drive device 53 so that the detection value of the pressure sensor 57 does not exceed the second pressure P2. By using the flow sensor 56 and the pressure sensor 57 together in this manner, the machining fluid can be controlled to a constant flow rate, and at the same time, the pump 52 can be used at the full rated pressure. Thus, the machining fluid can be supplied to the pipe electrode 28 at a higher pressure, and machining can efficiently be performed with a high-speed jet.

Though the embodiments of the narrow-hole electric discharge machine have been described, the present invention is not limited to the embodiments described above. A person skilled in the art would understand that various changes can be made to the embodiments described above.

For example, in the embodiments described above, the machine tool 100 comprises an electrode magazine 30. In another embodiment, the machine tool 100 may not comprise an electrode magazine 30, and the pipe electrodes 28 may be manually exchanged by an operator.

### REFERENCE SIGNS LIST

- 1: Workpiece
- 28: Pipe Electrode
- 52: Pump
- 56: Flow Sensor
- 56a: First Sensor
- 56b: Second Sensor
- 58a: Pump Control Unit
- 58b: Storage Unit
- 100: Narrow-Hole Electric Discharge Machine
- 114: Spindle

## Claims

1. A narrow-hole electric discharge machine for forming a narrow hole in a workpiece while ejecting a jet of machining fluid from a pipe electrode exchangeably mounted on a spindle, the machine comprising:
a variable flow rate pump for supplying the machining fluid to the pipe electrode,
a flow sensor, provided in piping between the pump and the pipe electrode, for detecting a flow rate of the machining fluid flowing in the piping,
a storage unit configured to store set flow rates of jets suitable for each cross-sectional size of a plurality of pipe electrodes having different cross-sectional sizes which can be mounted on the spindle, and
a pump control unit configured to drive the pump so as to maintain a detection value of the flow sensor at the set flow rate stored in the storage unit suitable for the cross-sectional size of the pipe electrode currently mounted on the spindle.

2. The narrow-hole electric discharge machine according to claim 1, wherein the flow sensor comprises a first sensor having a first measurement value interval and a second sensor having a second measurement value interval greater than the first measurement value interval, the first sensor is used for set flow rates less than a predetermined threshold, and the second sensor is used for set flow rates equal to or greater than the threshold.

3. The narrow-hole electric discharge machine according to claim 2, wherein the first measurement value interval and the second measurement value interval are determined so that a ratio of the first measurement value interval to a smallest set flow rate in the storage unit for which the first sensor is used is less than a ratio of the second measurement value interval to a smallest set flow rate in the storage unit for which the second sensor is used.

4. The narrow-hole electric discharge machine according to claim 1, wherein the pump control unit determines that the pipe electrode has become clogged when a detection value of the flow sensor is less than the set flow rate for a predetermined time or longer.
